# EUROPEAN PATENT APPLICATION

(11) **EP 1 510 730 A1**
(43) Date of publication of application: **02.03.2005**
(21) Application number: 03723325.1
(22) Date of filing: 12.05.2003
(51) Int. Cl.: F16H 9/18, B60K 17/06

(54) **VEHICLE WITH CONTINUOUSLY VARIABLE TRANSMISSION**

(30) Priority: 13.05.2002 JP 2002136424
(71) Applicant: YAMAHA HATSUDOKI KABUSHIKI KAISHA, Iwata-shi, Shizuoka 438-8501 (JP)
(72) Inventor: SUZUKI, Takahiro, YAMAHA HATSUDOKI K.K., Iwata-shi, Shizuoka 438-8501 (JP); TAKEBE, Mitsukazu, YAMAHA HATSUDOKI K.K., Iwata-shi, Shizuoka 438-8501 (JP); UNNO, Toshio, YAMAHA HATSUDOKI K.K., Iwata-shi, Shizuoka 438-8501 (JP)
(74) Representative: Grünecker, Kinkeldey, Stockmair & Schwanhäusser Anwaltssozietät
(86) International application number: PCT/JP2003/005877
(87) International publication number: WO 2003/095868

(57) **Abstract**

To provide a arrangement structure for a continuously variable transmission in a small vehicle in particular such as a motorcycle or saddle type vehicle which can reduce power loss and by which a motor can be installed in a space in which a centrifugal weight roller is conventionally located without increasing the size of a mission case by effectively using a limited narrow space in the vehicle. In the vehicle provided with a continuously variable transmission 9 including an electric generator 8 and a primary sheave 10 mounted on a driving side rotating shaft 6' (6, 6a, 6b) of an engine 1, the primary sheave 10 has a pair of a fixed sheave 13 and a movable sheave 14 mounted onthe driving side rotating shaft 6b, and a motor 15 for driving the movable sheave 14 in the axial direction. The driving side rotating shafts 6a and 6b are protruded from both sides of the engine 1, and the electric generator 8 is mounted on the driving side rotating shaft 6a that is protruded from one side of the engine 1 and the primary sheave 10 is mounted on the driving side rotating shaft 6b that is protruded from the other side of the engine 1. The motor 15 is mounted on the driving side rotating shaft 6b at a position outside the primary sheave 10 and coaxially positioned around the rotating shaft 6b.

## Description

### Technical Field

This invention relates to a small vehicle such as a saddle type vehicle like a motorcycle or three- or four-wheeled motor vehicle having a continuously variable transmission in its engine.

### Background Art

A belt continuously variable transmission (CVT) is used to transmit the driving force of the engine to the driven axle in an engine of a vehicle. In a CVT, an endless V-belt is wound between a primary sheave as a driving sheave provided on the crankshaft side of the engine and a secondary sheave as a driven sheave provided on the driven axle side to connect the crankshaft and the axle. The primary sheave has a fixed sheave axially fixed on a rotating shaft on the crankshaft side (the crankshaft or a driving shaft connected to the crankshaft) and a movable sheave mounted on the rotating shaft for axial sliding movement. The opposed faces of the paired fixed and movable sheaves are formed in a tapered (conical) shape. The position of the endless V-belt from the axis in the radial direction is changed in accordance with the distance between the opposed faces, and the rotation transmission ratio (change gear ratio) is changed in accordance with the position of the endless V-belt.

Conventionally, a primary sheave on the side of a driving shaft such as the crankshaft has a centrifugal weight roller as the means for moving the transmission mechanism, that is, the movable sheave, of a CVT of a motorcycle or the like. Since the centrifugal weight roller system is a mechanism which changes the position of a movable sheave by means of the centrifugal force of the weight using the torque of the output shaft (driving shaft) of the engine, the speed change operation depends on the rotating state of the output shaft of the engine. In general, the centrifugal weight roller is designed in view of the acceleration at full throttle. Thus, acceleration or deceleration cannot be achieved as intended by the driver under conditions other than expected. That is, there is nothing to do but let it take its course when the accelerator is in an intermediate opening position, when the accelerator is operated quickly or slightly, or when the engine is decelerating, and such transient states cannot be necessarily dealt with.

To solve such problem, a structure in which a movable sheave is driven by a motor disposed outside a housing via a gear train is proposed as disclosed in JP-B-H7-86383. In this structure, since a transmission mechanism using a motor can move the sheave to an arbitrary position independent of the rotating state of the output shaft of the engine, the acceleration feeling or the fuel mileage can be controlled as intended by the driver.

The conventional CVT using a motor is suitable for a vehicle with a relatively large mounting space in which it can be installed without limitation such as an automobile. However, in small vehicles such as a motorcycle and ATV (saddle type vehicle) having only a limited space for installing a transmission mechanism, the installation position of the motor is limited, and the motor causes a limitation on the space for installing other component parts.

The function of the motor is to convert electric energy converted from the output of the engine into a driving force to move the sheave. When a gear train is interposed between the motor and the sheave, a large amount of power is lost through the gears. In a motorcycle or the like with an engine having lower power than the engines of automobiles have, the power loss is not negligible. Although it may be considered to install a large-capacity electric generator or battery, it is undesirable from the viewpoint of weight reduction.

This invention has been made in view of the above prior art and it is, therefore, an object of this invention to provide a arrangement structure for a continuously variable transmission in a small vehicle in particular such as a motorcycle or saddle type vehicle which can reduce power loss and by which a motor can be installed in a space in which a centrifugal weight roller is conventionally located without increasing the size of a mission case by effectively using a limited narrow space in the vehicle.

### Disclosure of the Invention

In accomplishing the above object, this invention provides a vehicle provided with a continuously variable transmission including an electric generator and a primary sheave mounted on a driving side rotating shaft of an engine, in which the primary sheave has a pair of a fixed sheave and a movable sheave mounted on the driving side rotating shaft, and a motor for driving the movable sheave in the axial direction, in which the driving side rotating shaft are protruded from both sides of the engine and the electric generator is mounted on the part of the driving side rotating shaft that is protruded from one side of the engine and the primary sheave is mounted on the part of the driving side rotating shaft that is protruded from the other side of the engine, and in which the motor is mounted on the driving side rotating shaft at a position outside the primary sheave.

According to the above constitution, since the electric generator is mounted on one side of the driving side rotating shaft (the crankshaft or a driving shaft connected to the crankshaft) protruded from the right and left sides of the engine and the primary sheave and the motor is mounted on the other side of the driving side rotating shaft, optimum balance of weight on both sides of the engine in the transverse direction of the vehicle can be achieved and a layout which ensures stable operation can be achieved. Also, since the lengths of the parts of the driving shaft that are protruded to the right and left can be generally the same, the shape is well balanced, and other components can be laid out easily.

Also, since the motor is located outside the primary sheave (on the side away from the engine, that is, on the side of the end of the rotating shaft protruded from the engine), the assembling property is improved. Thus, maintenance can be easily performed and the parts can be easily assembled and disassembled at the time of repair or inspection.

In addition, since the motor is located away from the engine, the effect of heat from the engine is reduced and the cooling effect from the outside is enhanced, so that the motor can keep operating stably. Since the motor is located outside the continuously variable transmission as described above, a high motor cooling effect can be achieved. That is, as the thermal effect to the motor, the motor is heated by the heat from the engine transmitted through the crankcase and the rotating shaft and the heat produced by friction between the V-belt and the sheaves of the continuously variable transmission and transmitted therefrom. According to the structure of this invention, however, the motor is located at a position away from the engine on the crankshaft, the effect of the heat can be reduced and the motor can be cooled effectively.

In a preferred embodiment, the motor is coaxially positioned around the rotating shaft. According to this constitution, since the motor is coaxially positioned around the rotating shaft, a compact layout can be achieved, and the motor can be located in the space in which a weight roller is conventionally located. Thus, the motor can be housed in the engine case (crankcase) in which the continuously variable transmission is housed using the space effectively without increasing the size of the engine case and without interposing a gear train.

Also, since no weight roller is used, it is possible to prevent decrease in the frictional transmission force of the V-belt by grease. In view of the service life of the sheaves and deterioration of transmission efficiency overt time, the higher cleanliness in the CVT chamber in the crankcase is better. As measures to shut out dust from the outside, measures are taken such as attaching a packing between the contact surfaces of the crankcase and the CVT case or providing a filter in a passage for cooling air. In a conventional small vehicle such as a motorcycle, the centrifugal weight roller is located on the side of the primary sheave because of a restriction on the layout. The chamber in which the centrifugal weight roller of the primary sheave is located is filled with grease so that the weight roller can be slid smoothly on a cam. An O-ring is provided on the sealing surface of the chamber to prevent the grease from scattering. In the event that the seal is broken and the grease is scattered inside the CVT case, the inside of the CVT case is contaminated by the grease. Then, the friction between the sheaves and the belt is decreased, and power cannot be transmitted properly. When a motor is used instead of the centrifugal weight roller, there is no need for a large amount of grease for the centrifugal weight roller and thus there is no possibility of scattering of grease. Thus, a decrease in friction caused by adhesion of grease and the consequent reduction of transmission efficiency can be prevented and the service life of the sheaves can be improved.

In a preferred embodiment, the motor is located adjacent to and behind the movable sheave and the movable sheave has a back side on which cooling fins are formed.

According to the constitution, since the cooling fins are formed on the back side of the movable sheave, the motor adjacent to the movable sheave can be cooled effectively using the output of the engine with the space saved.

In another preferred embodiment, the ends of the driving side rotating shaft protruded from both sides of the engine are supported by an engine case via bearings.

According to the constitution, since the ends of the rotating shaft are supported by the engine case which is reinforced so that it can support the rotating shaft via bearings, the rotating shaft can be prevented from deflecting and supported by the engine case stably and firmly.

In a preferred application, the engine is mounted on a motorcycle.

According to the constitution, when the layout for the continuously variable transmission of this invention is applied to a motorcycle having only a limited space around the engine, the space can be used effectively, resulting in a good effect on the size reduction and the weight balance.

In another preferred application, the engine is mounted on a saddle type vehicle.

According to the constitution, when the layout for the continuously variable transmission of this invention is applied to a saddle type vehicle having only a limited space around the engine, the space can be used effectively, resulting in a good effect on the size reduction and the weight balance.

This invention also provides a motorcycle provided with a continuously variable transmission including a primary sheave mounted on a driving side rotating shaft directly coupled to or extending in parallel to a crankshaft and protruded from one side of an engine, in which the primary sheave has a pair of a fixed sheave and a movable sheave mounted on the driving side rotating shaft, and a motor for driving the movable sheave in the axial direction, and in which the motor is mounted on the driving side rotating shaft at a position outside the primary sheave and coaxially positioned around the driving side rotating shaft.

According to the constitution, since the motor is located outside the primary sheave (on the side away from the engine, that is, on the side of the end of the rotating shaft protruded from the engine) in a motorcycle having a limitation on the space as compared with ordinary automobiles, the assembling property is improved. Thus, maintenance can be easily performed and the parts can be easily assembled and disassembled at the time of repair or inspection. In addition, since the motor is located away from the engine, the effect of heat from the engine is reduced and the cooling effect from the outside is enhanced, so that the motor can keep operating stably. Since the motor is located outside the continuously variable transmission as described above, a high motor cooling effect can be achieved. That is, as the thermal effect to the motor, the motor is heated by the heat from the engine transmitted through the crankcase and the rotating shaft and the heat produced by friction between the V-belt and the sheaves of the continuously variable transmission and transmitted therefrom. It is extremely difficult to provide an additional cooling device for reducing the effect of heat to the motor on a motorcycle because of the limited space therein. According to the structure of this invention, however, the effect of heat in a motorcycle can be reduced and the motor can be cooled effectively.

Also, since the motor is coaxially positioned around the rotating shaft, a compact layout can be achieved, and the motor can be located in the space in which a weight roller is conventionally located. Thus, it is possible to realize a motorcycle having a layout in which the motor is housed in the engine case (crankcase) in which the continuously variable transmission is housed using the space effectively without increasing the size of the engine case and without interposing a gear train.

This invention also provides a saddle type vehicle provided with a continuously variable transmission including a primary sheave mounted on a driving side rotating shaft directly coupled to or extending in parallel to a crankshaft and protruded from one side of an engine, in which the primary sheave has a pair of a fixed sheave and a movable sheave mounted on the driving side rotating shaft, and a motor for driving the movable sheave in the axial direction, and in which the motor is mounted on the driving side rotating shaft at a position outside the primary sheave and coaxially positioned around the driving side rotating shaft.

According to the constitution, since the motor is located outside the primary sheave (on the side away from the engine, that is, on the side of the end of the rotating shaft protruded from the engine) in a saddle type vehicle having a limitation on the space as compared with ordinary automobiles as in the case with a motorcycle, the assembling property is improved. Thus, maintenance can be easily performed and the parts can be easily assembled and disassembled at the time of repair or inspection. In addition, since the motor is located away from the engine, the effect of heat from the engine is reduced and the cooling effect from the outside is enhanced, so that the motor can keep operating stably. Since the motor is located outside the continuously variable transmission as described above, a high motor cooling effect can be achieved. That is, as the thermal effect to the motor, the motor is heated by the heat from the engine transmitted through the crankcase and the rotating shaft and the heat produced by friction between the V-belt and the sheaves of the continuously variable transmission and transmitted therefrom. It is extremely difficult to provide an additional cooling device for reducing the effect of heat to the motor on a saddle type vehicle because of the limited space therein. According to the structure of this invention, however, the effect of heat in a motorcycle can be reduced and the motor can be cooled effectively.

Also, since the motor is coaxially positioned around the rotating shaft, a compact layout can be achieved, and the motor can be located in the space in which a weight roller is conventionally located. Thus, it is possible to realize a saddle type vehicle having a layout in which the motor is housed in the engine case (crankcase) in which the continuously variable transmission is housed using the space effectively without increasing the size of the engine case and without interposing a gear train.

### Brief Description of Drawings

FIG. 1 is a cross-sectional view illustrating the constitution of an engine according to an embodiment of this invention.
FIG. 2 is an enlarged view of a crankshaft of the engine shown in FIG. 1 and the parts around it.
FIG. 3 is an entire structural view of a motorcycle to which this invention is applied.
FIG. 4 is a detailed view of the engine of the motorcycle shown in FIG. 3.
FIG. 5 is a side view of a four-wheeled ATV to which this invention is applied.
FIG. 6 is a side view of a three-wheeled ATV to which this invention is applied.

### Best Mode for Carrying Out the Invention

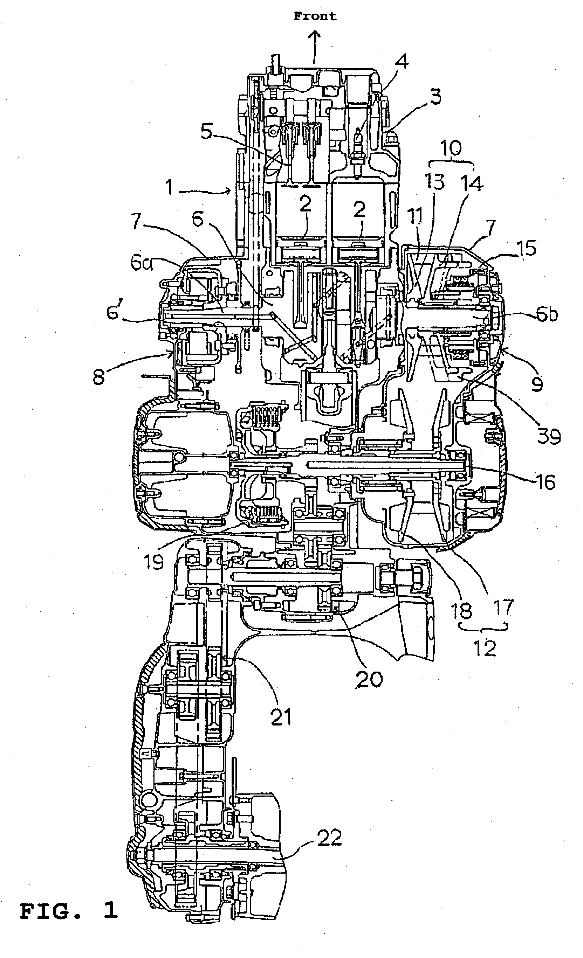

FIG. 1 is a cross-sectional view illustrating the entire constitution of an engine for a vehicle according to this invention.

This example shows a four-cycle, two-cylinder engine 1 having pistons 2 in the cylinders. Each cylinder has a cylinder head 3 with a spark plug 4 and intake and exhaust valves 5 (the cross-sections of the cylinder heads 3 are taken at different positions for each cylinder). A crankshaft 6 connected to the pistons 2 and rotatable is provided in a crankcase 7. The crankshaft 6 protruded from both sides of the engine 1 (to the right and left in the drawing) to form a left protruded crankshaft 6a and a right protruded crankshaft 6b. An electric generator 8 is mounted on the left protruded crankshaft 6a. A primary sheave 10 of a continuously variable transmission 9 is mounted on the right protruded crankshaft 6b. The continuously variable transmission 9 is constituted of the primary sheave 10, and a secondary sheave 12 connected to the primary sheave 10 by a belt 11 wound around them.

The primary sheave 10 is constituted of a fixed sheave 13 fixed on a driving side rotating shaft 6' (the right protruded crankshaft 6b) and a movable sheave 14 disposed opposite the fixed sheave 13 and movable in the axial direction. The driving side rotating shaft 6', which is the crankshaft 6 (or a shaft directly and integrally connected to the crankshaft 6) in this example, may be a rotating shaft extending parallel to the crankshaft 6 and connected to the crankshaft 6 via a transmission system such as a chain or gear.

A motor 15 for driving the movable sheave 14 is provided behind (on the side away from the engine 1) of the movable sheave 14. The motor 15 is coaxially positioned around the crankshaft 6.

The secondary sheave 12 is constituted of a fixed sheave 17 and a movable sheave 18 mounted on a driven side rotating shaft 16. A clutch 19 for connecting and disconnecting the driven side rotating shaft 16 to and from an intermediate gear 20 is provided on the driven side rotating shaft 16. The intermediate gear 20 is connected to an axle 22 via an intermediate transmission system 21.

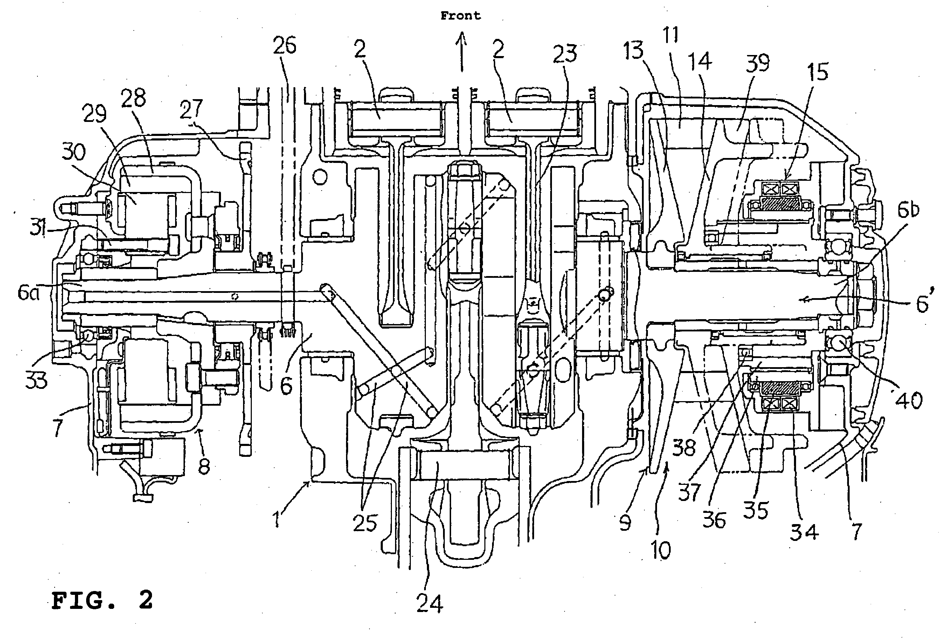

FIG. 2 is an enlarged view of the crankshaft of the engine and the parts around it.

The pistons 2 are connected to the crankshaft 6 via connecting rods 23. Designated as 24 is a balance weight and as 25 is an oil passage. A cam chain 26 and a starter gear 27 are mounted on the left protruded crankshaft 6a, and the electric generator 8 is mounted outside them (on the side away from the engine). The electric generator 8 is constituted of a fly wheel 28 fixed to the crankshaft 6a, a magnet (rotor) 29 secured to an inner surface of the fly wheel 28 and rotatable together with the fly wheel 28, and a coil (stator) 30 disposed opposite the inner side of the magnet 29. The stator coil 30 is secured to the crankcase 7 by a bolt 31. The left protruded crankshaft 6a has an end supported by the crankcase 7 via a bearing 33.

Cooling fins 39 are formed on the back side of the movable sheave 14 mounted on the right protruded crankshaft 6b. The fins 39 supply air to cool the motor 15.

The motor 15 has a stator coil 34 secured to the crankcase 7, a rotor 35 constituted of a magnet and disposed radially inside the stator coil 34 and opposed to the stator coil 34, a rotor cylinder 36 integrated with the rotor 35, and a slider cylinder 37 having external threads which engage the internal threads of the rotor cylinder 36. The slider cylinder 37 is connected to the movable sheave 14 via a bearing 38 for axial rotation and sliding movement together with the movable sheave 14.

The motor 15 (the assembly constituted of the stator coil 34, the rotor 35, and so on) is secured from the outside of the crankcase 7 by a bolt (not shown). The motor can be thereby attached and detached from the outside of the crankcase. Thus, disassemble, repair and maintenance of the motor can be made with ease.

The right protruded crankshaft 6b has an end supported by the crankcase 7 via a bearing 40.

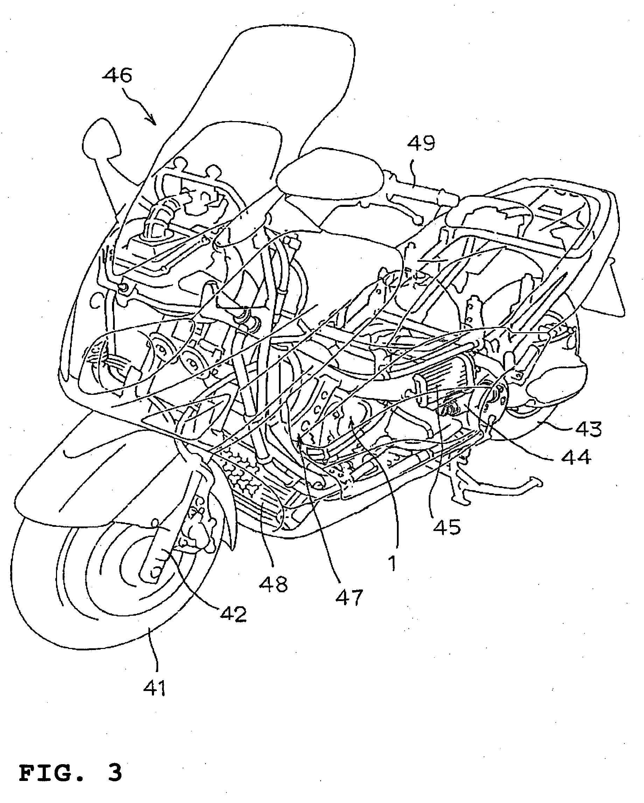

FIG. 3 is an entire structural view of a motorcycle to which this invention is applied.

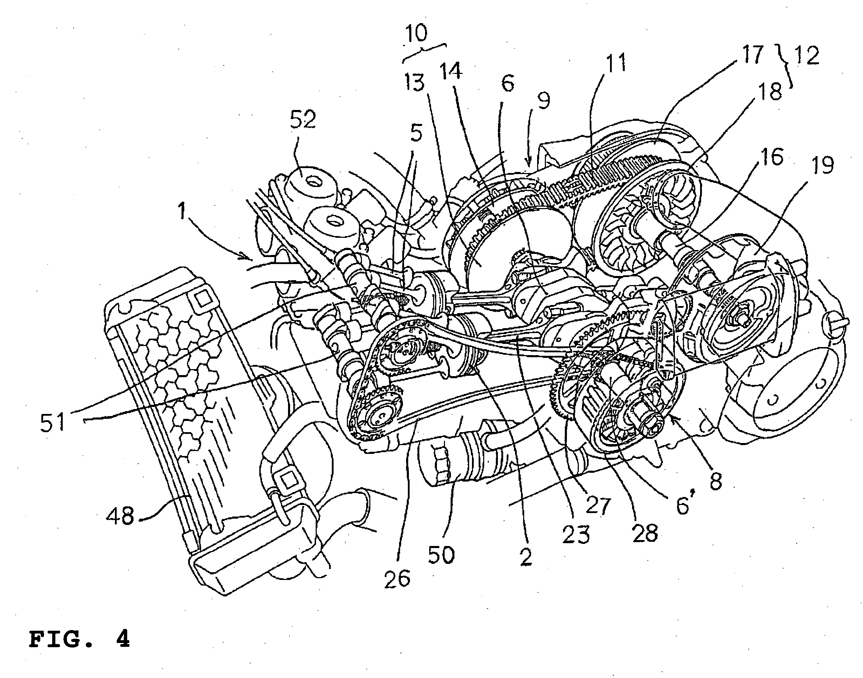

The motorcycle 46 has a front wheel 41 supported by a front fork 42 connected to a handle bar 49. A rear wheel 43 is supported by a body frame 47 via a horizontally disposed suspension 44. A water-cooled, four-cycle engine 1 is mounted at the center of the vehicle body. Designated as 45 is a left element of air cleaner elements provided on the right and left of an intermediate part of the vehicle body. Designated as 48 is a radiator. The continuously variable transmission 9 of this invention is disposed on the right side of the engine 1 as shown in FIG. 4 described later.

FIG. 4 is a detailed view of the engine of the motorcycle shown in FIG. 3.

The engine 1 is a two-cylinder, four-valve DOHC engine in this example. Pistons 2 are connected to a crankshaft 6 via connecting rods 23. A cam chain 26 and a starter gear 27 is mounted on the left side of the crankshaft 6, and a fly wheel 28 is mounted on an end of the crankshaft 6 to form an electric generator 8. The cam chain 26 is wound around intake and exhaust camshafts 51 to open and close four intake and exhaust valves 5 for each cylinder in synchronization with the crankshaft 6. Designated as 50 is an oil cooler, and as 52 is a carburetor.

The continuously variable transmission 9 is disposed on the right side of the engine 1 as described before. The continuously variable transmission 9 has a primary sheave 10 constituted of a fixed sheave 13 and a movable sheave 14 mounted on the crankshaft 6, a secondary sheave 12 constituted of a fixed sheave 17 and a movable sheave 18 mounted on the driven side rotating shaft 16, and a V-belt 11 wound between the primary sheave 10 and the secondary sheave 12. A multi-plate clutch 19 is mounted on the driven side rotating shaft 16.

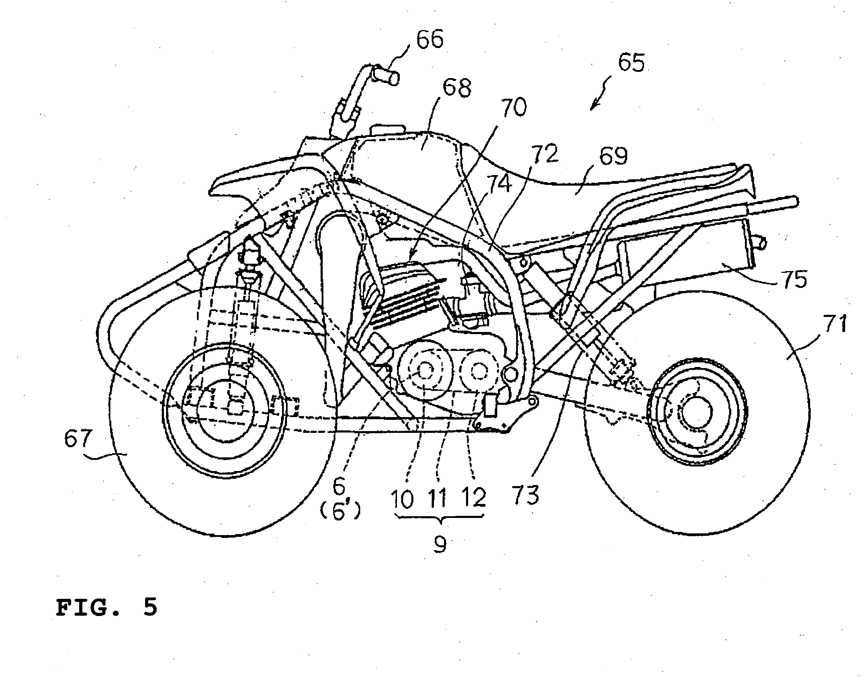

FIG. 5 is a side view of a four-wheeled ATV to which this invention is applied. An ATV is a saddle type vehicle for running on sand, barren or agricultural land.

A four-wheel ATV 65 has a handle bar 66 at the front of the vehicle body for steering two front wheels 67 (only one of them is shown) via a steering system (not shown). The four-wheel ATV 65 has a fuel tank 68 in the rear of the handle bar 66, and a seat 69 for a rider to sit on in the rear of the fuel tank 68. An engine 70 is mounted at the center of the vehicle body. The engine 70 drives two rear wheels 71 (only one of them is shown) via the continuously variable transmission 9. The two rear wheels 71 are swingably supported by a body frame 72 via a suspension 73. The continuously variable transmission 9 is constituted of a primary sheave 10 mounted on the crankshaft 6 and a secondary sheave 12 connected to the primary sheave 10 by a V-belt 11 as described before. Designated as 74 is a carburetor, and as 75 is an exhaust muffler.

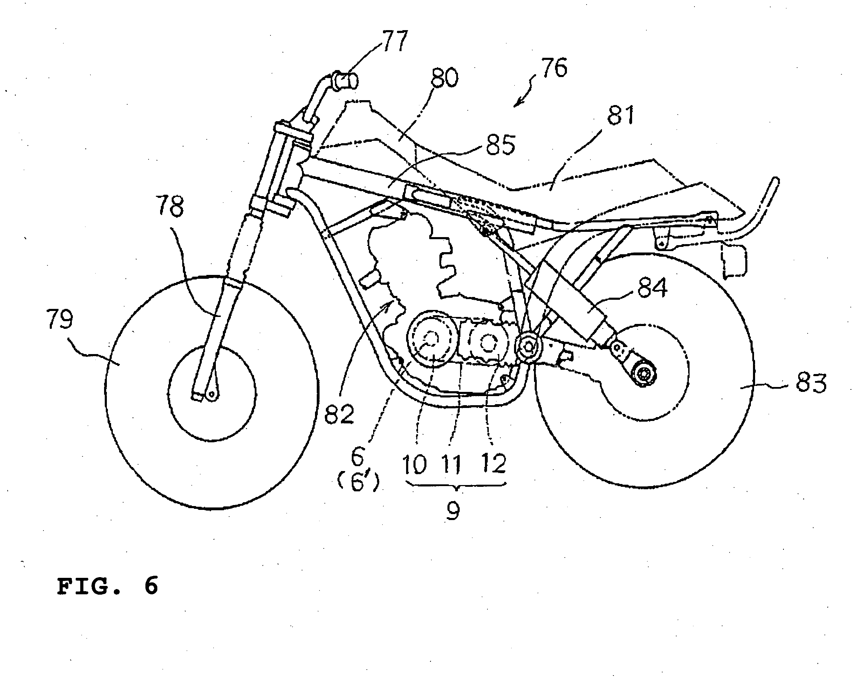

FIG. 6 is a side view of a three-wheeled ATV to which this invention is applied.

A three-wheel ATV 76 has a handle bar 77 at the front of the vehicle body for steering one front wheel 79 supported by a front fork 78 via a steering system (not shown). The three-wheel ATV 76 has a fuel tank 80 in the rear of the handle bar 77, and a seat 81 for a rider to sit on in the rear of the fuel tank 80. An engine 82 is mounted at the center of the vehicle body. The engine 82 drives two rear wheels 83 (only one of them is shown) via the continuously variable transmission 9. The two rear wheels 83 are swingably supported by a body frame 85 via a suspension 84. The continuously variable transmission 9 is constituted of a primary sheave 10 mounted on the crankshaft 6 and a secondary sheave 12 connected to the primary sheave 10 by a V-belt 11 as described before.

### Industrial Applicability

As has been described previously, in this invention, an electric generator is mounted on one side of a driving side rotating shaft (the crankshaft or a driving shaft connected to the crankshaft) protruded from the right and left side of the engine and a primary sheave and a motor is mounted on the other side of the driving side rotating shaft, optimum balance of weight on both sides of the engine in the transverse direction of the vehicle can be achieved and a layout which ensures stable operation can be achieved. Also, since the lengths of the parts of the driving shaft that are protruded to the right and left can be generally the same, the shape is well balanced, and other components can be laid out easily.

Also, since the motor is located outside the primary sheave (on the side away from the engine, that is, on the side of the end of the rotating shaft protruded of the engine), the assembling property is improved. Thus, maintenance can be easily performed and the parts can be easily assembled and disassembled at the time of repair or inspection. In addition, since the effect of heat from the engine is reduced and the cooling effect from the outside is enhanced, the motor can keep operating stably.

Also, since the motor is coaxially positioned around the rotating shaft, a compact layout can be achieved, and the motor can be located in the space in which a weight roller is conventionally located. Thus, the motor can be housed in the engine case (crankcase) in which the continuously variable transmission is housed using the space effectively without increasing the size of the engine case and without interposing a gear train.

In addition, since cooling fins are formed on the back side of the movable sheave, the motor adjacent to the movable sheave can be cooled effectively using the output of the engine with the space saved.

Also, according to the configuration in which the ends of the rotating shaft protruded from the both sides of the engine are supported by the engine case via bearings, since the ends of the rotating shaft are supported by the engine case which is reinforced so that it can support the rotating shaft, the rotating shaft can be prevented from deflecting and supported by the engine case stably and firmly.

## Claims

1. A vehicle provided with a continuously variable transmission including an electric generator and a primary sheave mounted on a driving side rotating shaft of an engine, wherein the primary sheave has a pair of a fixed sheave and a movable sheave mounted on the driving side rotating shaft, and a motor for driving the movable sheave in the axial direction, wherein the driving side rotating shaft is protruded from both sides of the engine and the electric generator is mounted on the part of the driving side rotating shaft that is protruded from one side of the engine and the primary sheave is mounted on the part of the driving side rotating shaft that is protruded from the other side of the engine, and wherein the motor is mounted on the driving side rotating shaft at a position outside the primary sheave.

2. The vehicle provided with a continuously variable transmission as set forth in Claim 1, wherein the motor is coaxially positioned around the rotating shaft.

3. The vehicle provided with a continuously variable transmission as set forth in Claim 1 or 2, wherein the motor is located adjacent to and behind the movable sheave and the movable sheave has a back side on which cooling fins are formed.

4. The vehicle provided with a continuously variable transmission as set forth in Claim 1, 2 or 3, wherein the ends of the driving side rotating shaft protruded from both sides of the engine are supported by an engine case via bearings.

5. A motorcycle provided with a continuously variable transmission according to any one of Claims 1 to 4.

6. A saddle type vehicle provided with a continuously variable transmission according to any one of Claims 1 to 4.

7. A motorcycle provided with a continuously variable transmission including a primary sheave mounted on a driving side rotating shaft directly coupled to or extending in parallel to a crankshaft and protruded from one side of an engine, wherein the primary sheave has a pair of a fixed sheave and a movable sheave mounted on the driving side rotating shaft, and a motor for driving the movable sheave in the axial direction, and wherein the motor is mounted on the driving side rotating shaft at a position outside the primary sheave and coaxially positioned around the driving side rotating shaft.

8. A saddle type vehicle provided with a continuously variable transmission including a primary sheave mounted on a driving side rotating shaft directly coupled to or extending in parallel to a crankshaft and protruded from one side of an engine, wherein the primary sheave has a pair of a fixed sheave and a movable sheave mounted on the driving side rotating shaft, and a motor for driving the movable sheave in the axial direction, and wherein the motor is mounted on the driving side rotating shaft at a position outside the primary sheave and coaxially positioned around the driving side rotating shaft.
